# EUROPEAN PATENT SPECIFICATION

(11) **EP 4 001 615 B1**
(45) Date of publication and mention of the grant of the patent: **15.10.2025**
(21) Application number: 20208774.8
(22) Date of filing: 19.11.2020
(51) Int. Cl.: F02C 3/20, F02C 7/22, F23K 5/18, F23K 5/08, F01D 15/10

(54) **SYSTEM AND METHOD FOR TREATING FUEL FOR A GAS TURBINE ENGINE**
SYSTEM UND VERFAHREN ZUR BEHANDLUNG VON KRAFTSTOFF FÜR EIN GASTURBINENTRIEBWERK
SYSTÈME ET MÉTHODE DE TRAITEMENT DU CARBURANT POUR UNE TURBINE À GAZ

(43) Date of publication of application: 25.05.2022
(73) Proprietor: GE Vernova Technology GmbH, 5400 Baden (CH)
(72) Inventor: De Simone, Andrea, 5400 Baden (CH); Capelli, David, 5400 Baden (CH)
(74) Representative: Novagraaf Group

(56) References cited:
- EP-A1- 3 187 782
- EP-A1- 3 339 997
- NZ-A- 566 748
- US-A1- 2015 336 076
- US-A1- 2018 348 191
- US-B2- 10 184 397

## Description

### BACKGROUND

The subject matter disclosed herein relates to a system and method for treating and filtering fuel for a power generation system, such as a power generation system having a generator driven by a gas turbine engine.

Fuel treatment systems are often used to remove fuel contamination in the fuel. Managing fuel delivery and system cleanliness through proper filtrations is beneficial for sustaining efficient engine operations. Power generation systems may include separate fuel treatment systems for various treatments of fuel. Unfortunately, the separate fuel treatment systems may increase costs, require additional space, require additional connections between the separate fuel treatment systems, and require additional time and labor for installation. A power generation system may be used in emergency situations and/or as a temporary source of power for the electrical grid. Accordingly, the additional connections, time, and labor associated with installation is particularly disadvantageous when power is needed. Therefore, a need exists for a fuel treatment system that simplifies the installation process, while providing various types of fuel treatment to ensure reliable operation of the power generation system.

EP 3 339 997A1 suggests a distributed control system that receives analysis data. The analysis data includes quality attributes of fluid samples and an indication of a plant location corresponding to the fluid samples. The system identifies one or more anomalies of fluid based upon the quality attributes of the plurality of fluid samples and attributes the one or more anomalies to one or more particular areas. The system triggers an alert, trigger control, or both, based at least in part upon the identified one or more anomalies and the attributed one or more particular areas.

EP 3 187 782 A1 discloses a gas turbine engine for combusting a flow of heavy fuel oil with vanadium contaminates therein. The gas turbine engine includes a combustor for combusting the flow of heavy fuel oil, an upstream magnesium mixing system for mixing a flow of magnesium with the flow of heavy fuel oil, a turbine, an air extraction system in communication with the turbine, and a downstream magnesium mixing system for providing the flow of magnesium to the air extraction system.

US 2018/348191 suggests a system that includes a gas turbine system that combusts a fuel to produce power. The gas turbine system is disposed in a gas turbine site. The system also includes an analyzer system that determines multiple batch fuel characteristics of a batch of the fuel, and the batch of the fuel is delivered via a transport system. Moreover, the system includes a small batch fuel processing system that receives the batch of fuel and filters the batch of fuel to a filtered batch of fuel based on the multiple fuel characteristics. Further, the filtered batch of fuel adheres to manufacturer fuel recommended characteristics for use in the gas turbine system.

US 10,184,397 B2 describes the system that includes a first mobile body configured to support a turbine engine and an air intake section coupled to the turbine engine. The system also includes a second mobile body configured to support a generator. The first and second mobile bodies are configured to guide a removable coupling between the turbine engine and the generator. The system also includes a third mobile body configured to support one or more partially assembled components associated with the turbine engine and the generator.

### BRIEF DESCRIPTION

The herein claimed invention is defined in the claims. Effects and advantages of the disclosed subject matter, whether explicitly mentioned or not, will become apparent in view of the disclosure provided below.

Certain embodiments are summarized below. These embodiments are not intended to limit the scope of the claimed subject matter, but rather these embodiments are intended only to provide a brief summary of possible forms of the subject technology. Indeed, the invention may encompass a variety of forms that may be similar to or different from the embodiments set forth below.

In a first embodiment, a system as set forth in claim 1 is provided.

In a second embodiment, a method as set forth in the independent method claim is provided.

### BRIEF DESCRIPTION OF THE DRAWINGS

These and other features, aspects, and advantages of the present systems and methods will become better understood when the following detailed description is read with reference to the accompanying drawings in which like characters represent like parts throughout the drawings, wherein:
FIG. 1 is a schematic block diagram of an embodiment of a fuel treatment system in a containerized module in conjunction with a turbine trailer, a generator trailer, and a control house of a power generation system;
FIG. 2 is a schematic block diagram of an embodiment of a tank drain treatment system;
FIG. 3 is a schematic top view of an embodiment of the containerized module and the control house;
FIG. 4 is a schematic front view of an embodiment of the containerized module and the control house; and
FIG. 5 is a schematic block diagram of an embodiment of a fluid connection panel.

### DETAILED DESCRIPTION

One or more specific embodiments of the present systems and methods for fuel treatment will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Regardless of how cautiously a system is designed or how carefully manual intervention is implemented to prevent contaminants from entering a fuel system, water, particulate, biological contaminants, and other contaminants may still contaminate the fuel system. As discussed in greater detail below, the present embodiments described herein provide an efficient system to filter and treat fuel for a power generation system. The fuel system may provide treated fuel oil to be burned in a gas turbine system, in which gas turbine generators are often used to produce electricity for a power grid. As a result, a system that effectively filters contaminants and treats fuel is beneficial to maintain the efficiency of gas turbine generators.

A power generation system may use a plurality of separate fuel treatment systems (e.g., decentralized and/or independent fuel treatment systems in different zones) having different types of fuel treatments. The power generation system may be mobile (e.g., one or more trailers with wheels, one or more motorized vehicles, or a combination thereof) or may be stationary. Unfortunately, the separate fuel treatment systems may increase costs and complexity during installation and operation. For example, the installation of the separate fuel treatment systems may require additional time and labor costs for arranging the systems at a site, making connections between the systems, and setting up the systems to interact with one another and/or a central control system.

Therefore, the disclosed embodiments provide an integrated fuel treatment system having multiple fuel treatment subsystems (e.g., water removal, particulate removal, and biological contaminant removal) in a common housing or container, e.g., a mobile container. For example, the sub-systems of the integrated fuel treatment system may be located in a single containerized module (e.g., one zone) rather than multiple separate containers or zones, thus minimizing the number of interconnections and reducing cost and effort for the installation process of the fuel treatment system. Not only does having a containerized module for the fuel treatment system provide ease in installation, but also it provides efficiency in the system's mobility.

The fuel treatment system of the containerized module treats and filters fuel from a raw fuel tank and a clean fuel tank. The containerized module includes a tank drain treatment system, a demineralized water supply, one or more forwarding pumps, one or more separators, and one or more filters. The tank drain treatment system cleans the fuel from the raw fuel tank and the clean fuel tank by removing water, particulates, and biological contaminants, such as bacteria from the fuel. In particular, the tank drain system includes a filter to remove the particulates, a separator to remove the water, and a sub-system containing ultraviolet (UV) lights to remove the biological contaminants. The demineralized water supply is used to wash the one or more separators periodically (every 3 hours, every 24 hours, or any suitable time period). In addition to the components of the tank drain system, the containerized module further includes one or more additional separators and filters to remove water content and particulates. The one or more forwarding pumps are configured to pump the fuel through these additional separators and filters before the fuel is sent to a gas turbine trailer.

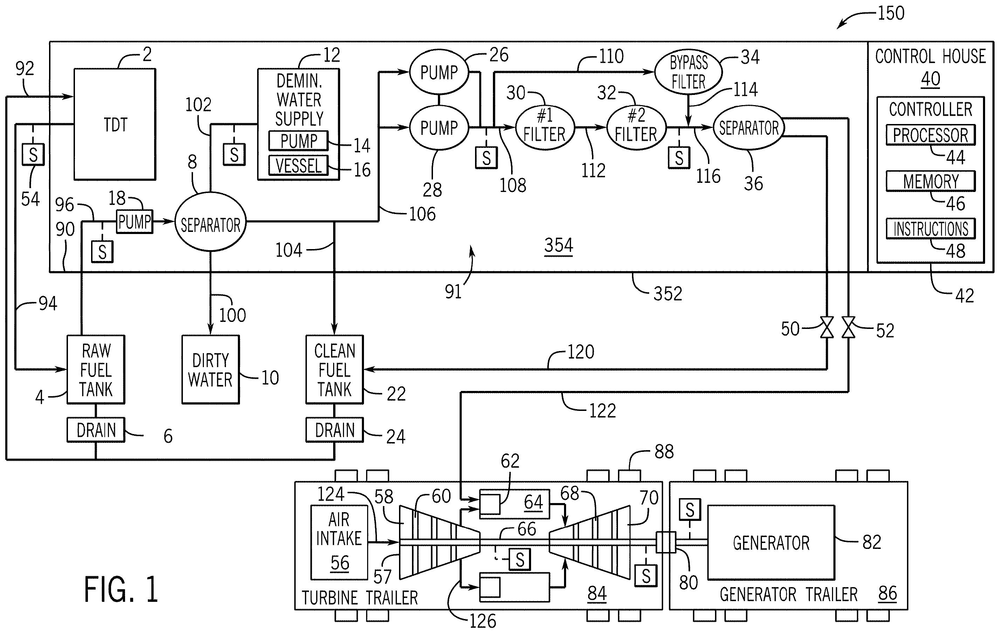

With the preceding in mind, the following figures relate to an integrated system within a containerized module to efficiently filter and treat fuel, which may be provided to a gas turbine engine. FIG. 1 is a schematic block diagram of an embodiment of a power generation system 150, which includes a containerized module 90 having a fuel treatment system 91 and a control house 40, a turbine trailer 84, and a generator trailer 86. In certain embodiments, the containerized module 90 may be a 40-foot high (or any suitable height) ISO container. The ISO container may be defined as an international intermodal container that is manufactured according to the specifications outlined by the International Organization for Standardization (ISO). The ISO container may be used across from different modes of transportation (i.e. ship, train, truck) without unloading and reloading cargo within it. The containerized module 90 may be loaded onto a trailer to facilitate transportation. In another embodiment, the containerized module 90 may, itself, have wheels to facilitate mobility.

The containerized module 90 contains the fuel treatment system 91, which includes multiple types of fuel treatment sub-systems. For example, the fuel treatment system 91 includes a tank drain treatment (TDT) system 2 to remove water content, particulate matter, and biological contaminants from fuel received from a raw fuel tank 4 and clean fuel tank 22. The raw fuel tank 4 may contain liquid fuel derived from fossil fuels, hydrogen fuel, ethanol, or biodiesel. The clean fuel tank may contain liquid fuel from the raw fuel tank 4 that has been filtered via a water removal system (e.g., one or more separators 8). The fuel tanks may vary in size and shape (rectangular, cylindrical, or any suitable shape). The fuel tanks are designed such that they are capable of storing enough fuel to operate a gas turbine engine 57 for a threshold length of time. While the fuel tanks generally remain closed to prevent contamination, they may be vented to allow air to enter periodically (every 3 hours, every 10 hours, or any suitable period of time).

Each of the fuel tanks 4 and 22 may have an opening to fill with fuel (not shown) and a drain (i.e. drain 6 of the raw fuel tank 4 and drain 24 of the clean fuel tank 22) to discharge the fuel. In one embodiment, while the liquid fuel from the clean fuel tank 22 is pumped to the gas turbine engine 57, the tank drain treatment system 2 simultaneously removes water content, particulate matter, and biological contaminants from the fuel in the raw fuel tank 4 and the clean fuel tank 22. Liquid fuel may be discharged via drain 6 from the raw fuel tank 4 and may flow to the tank drain treatment system 2 as indicated by arrow 92. Similarly, liquid fuel may be discharged via drain 24 from the clean fuel tank 22 and may flow to the tank drain treatment system 2 as indicated by arrow 92. By way of example, the tank drain treatment system 2 receives liquid fuel from the bottom of each tank 4 and 22.

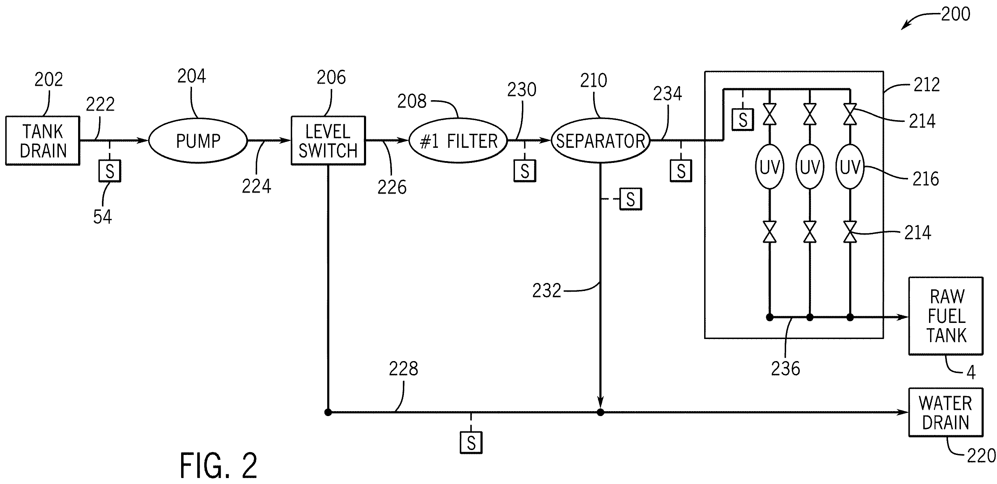

The tank drain treatment system 2 contains one or more filters, one or more separators, one or more pumps, and one or more ultraviolet (UV) light modules (212, shown in FIG. 2). The one or more pumps enable the liquid fuel from the bottoms of the raw fuel tank 4 and the clean fuel tank 22 to flow to the one or more filters of the tank drain treatment system 2. The one or more filters remove particulate matter from the liquid fuel received from the fuel tanks 4, 22. After exiting the one or more filters of the tank drain treatment system 2, the liquid fuel moves to the one or more separators, which remove water content from the liquid fuel. Afterwards, the UV light modules remove biological contaminants, such as bacteria, from the liquid fuel. In certain embodiments, the fuel may flow through the filters, separators and UV light modules in parallel and/or in any order in series. A more in depth-discussion of the tank drain treatment system 2 will be provided below. After the fuel is treated in the tank drain treatment system 2, the system routes the treated fuel to the raw fuel tank 4.

The raw fuel tank 4 pumps the fuel to the separator 8 via pump 18 as indicated by arrow 96. For example, one or more pumps may be disposed in the raw fuel tank 4, the line 96, the separator 8, and/or upstream from the separator 8 (e.g., pump 18) to pump the fuel through the separator 8. The separator 8 is aimed at reducing water content and removing medium-sized particulate, by separating two fluids from each other or separating a fluid from a solid based on their different densities. Water rapidly oxidizes ferrous metal such as steel, which may be found within components of the system. Thus, the separator 8 is useful in removing water content before it may cause harm such as by damaging metal components of the system.

The separator 8 may use centrifugal force instead of just gravity to separate solid phases or solid and liquid phases. For example, the separator 8 may be a disc-stack centrifuge, such that the disc-stack structure ensures that lighter particles follow heavier particles rather than the liquid, thus improving the separation. However, the separator 210 (FIG. 2) may include a variety of types of separators. A demineralized water supply 12 cleans or washes the separator 8 with demineralized water. The demineralized water supply 12 contains a vessel 16 to store the supply of demineralized water and a pump 14 to pump the demineralized water to the separator 8. Examples of the pumps 14 and 18 may include three-screw pumps, two-screw-pumps, or centrifugal pumps.

Water content released from the separator 8 may be directed to a dirty water tank 10 as indicated by arrow 100. Meanwhile, the liquid fuel, now containing substantially less water content, may be directed from the separator 8 to the raw fuel tank 4 and/or to the clean fuel tank 22. As illustrated, a portion of the liquid fuel from the separator 8 is sent to the clean fuel tank 22 as indicated by arrow 104, while the remaining portion of the liquid fuel is sent to forwarding pumps 26 and 28 as indicated by arrow 106. In certain embodiments, the liquid fuel from the separator 8 may be sent separately and simultaneously to each forwarding pump 26 and 28 (e.g., in a parallel arrangement) or the liquid fuel may be sent to the forwarding pumps 26 and 28 in a series arrangement (e.g., pump 26 followed by pump 28).

The forwarding pumps 26 and 28 may pump the liquid fuel to additional filters and separators to remove finer particulate and residual water. In certain embodiments, as indicated by arrow 108, the forwarding pumps 26 and 28 may pump the liquid fuel to a particulate removal system (e.g., one or more filters 30, 32, and 34), such as a stage 1 filter 30. The stage 1 filter 30 may have a first size range of filtration (e.g., 4 to 7 microns) to remove contaminants (e.g., particulate) from the liquid fuel. From the stage 1 filter 30, the liquid fuel flows along a flow path indicated by arrow 112 to the stage 2 filter 32, which may have a second size range of filtration (e.g., 1 to 3 microns) to remove contaminants (e.g., particulate) from the liquid fuel.

In certain embodiments, if the stage 1 filter 30 and stage 2 filter 32 become non-functional due to clogging of debris, broken parts, or other issues, then the forwarding pumps 26 and 28 may pump the liquid fuel to a bypass filter 34 as indicated by arrow 110. The forwarding pumps 26 and 28 may vary in type and pumping capacity, and examples of the pumps 26 and 28 may include three-screw pumps, two-screw-pumps, or centrifugal pumps. The bypass filter 34 may have a third size range of filtration (e.g., 1 to 3 microns) to remove contaminants (e.g., particulate) from the liquid fuel.

After passing through the stage 1 filter 30 and the stage 2 filter 32 or through the bypass filter 34, the liquid fuel flows to a water removal system (e.g., one or more separators 36) as indicated by arrow 116. The separator 36 may separate solid phases or solid and liquid phases from the liquid fuel. For example, the separator 36 may be a coalescer, which aggregates lighter or smaller particles into larger particles that are capable of being drained gravitationally, thus improving the separation. However, the separator 36 may also vary in size and shape. The separator 36 may be responsible for removing any residual water content from the liquid fuel.

The separator 36 is fluidly coupled to valves 50 and 52 disposed along supply lines 120 and 122, respectively, which define supply flow paths. The valve 50 controls how much of the liquid fuel from the separator 36 is routed back to the clean fuel tank 22 via supply line 120, while the valve 52 controls how much of the liquid fuel from the separator 36 is routed, via supply line 122, to the turbine trailer 84for combustion in the gas turbine engine 57.

The turbine trailer 84 includes an air intake system 56, the gas turbine engine 57, and a turbine exhaust collector. The combustion air intake system 56 includes one or more air filters configured to remove particulate and/or moisture from an intake air before routing the intake air to a compressor 58 of the gas turbine engine 57. The compressor 58 includes one or more compressor stages (e.g., 1 to 30 stages having compressor blades), which compresses the air for use in combustion and cooling of the gas turbine engine 57. The compressor 12 directs a portion of the compressed air to one or more fuel nozzles 62 of one or more combustors 64. The fuel nozzles 62 intake and mix fuel with the compressed air and distribute the air-fuel mixture into the one or more combustors 64 in a suitable ratio for combustion.

In certain embodiments, each combustor 64 includes a plurality of fuel nozzles 62. The air-fuel mixture combusts in a chamber within each combustor 64, thereby creating hot pressurized exhaust gases. Each combustor 64 directs the exhaust gases through a turbine 70 toward the turbine exhaust collector. The turbine 70 includes one or more turbine stages (e.g., 1 to 30 stages having turbine blades) driven by the exhaust gas. The turbine exhaust collector may direct the exhaust gas towards an exhaust stack that vents the exhaust gases from the gas turbine engine 57.

As the exhaust gas passes through the turbine 70, the gases force turbine blades 68 to rotate a shaft 66 along an axis of the gas turbine engine 57. As illustrated, the shaft 22 may be connected to various components of the gas turbine engine 57, including the compressor 58. The compressor 58 also includes blades 60 coupled to the shaft 66. As the shaft 66 rotates, the blades 60 within the compressor 58 also rotate, thereby compressing air from the air intake system 56 and routing the compressed air to the fuel nozzles 62 and/or combustors 64. The shaft 66 may also be connected to a load, such as an electrical generator 82, which may be driven by the gas turbine engine 57, in an electrical power plant, for example. In particular, the shaft 66 may be connected to the electrical generator 82 via a coupling 80, and the electrical generator 82 may be a part of a generator trailer 86.

The turbine trailer 84 and the generator trailer 86 of the power generation system 150 may include a plurality of wheels 88 to facilitate transportation on various roads, such that the turbine trailer 84 and the generator 86 may be driven to a site needing power. The containerized module 90, the turbine trailer 84, and the generator trailer 86 also include a plurality of sensors 54 (represented by "S"), which may transmit signals to the control house 40 integrated within the containerized module 90. The control house 40 includes a controller 42 that regulates the fuel flow within and between the containerized module 90, the tanks 4 and 22, and the turbine trailer 84.

For example, the controller 42 may be communicatively coupled to each of the illustrated components, including, but not limited to, the pumps 14, 18, 26, and 28, the valves 50 and 52, the TDT 2, the separators 8 and 36, and so forth. In certain embodiments, the controller 42 in the control house 40 is configured to monitor levels of contaminants (e.g., water, particulate, and biological contaminants) in the fuel tanks 4 and 22 and at various locations throughout the fuel treatment system 91 and to control the fuel treatment system 91 to improve performance of each type of fuel treatment (e.g., filtration by filters, separation by separators, biological removal by UV lights, etc.) and to reduce contaminant levels below threshold levels. In certain embodiments, when contaminant levels in the liquid fuel are higher than or above an upper threshold, the controller 42 may be configured to regulate the fuel treatment system 91 to operate for a longer duration of time and/or at a flow rate suitable to speed up the process of reducing the contaminant levels below a lower threshold.

In some embodiments, the control house 40 having the controller 42 is dedicated to only the fuel treatment system 91, rather than controlling the gas turbine engine 57. However, certain embodiments of the control house 40 having the controller 42 may be configured to control the gas turbine engine 57, including combustion, fuel/air ratios, emissions levels, power output, and so forth. In such an embodiment, the gas turbine engine 57 may not use a separate control house on a different trailer.

The controller 42 may include a processor(s) 44 (e.g., a microprocessor(s)) that may execute software programs to control the power generation system 150. Moreover, the processor 44 may include multiple microprocessors, one or more "general-purpose" microprocessors, one or more special-purpose microprocessors, and/or one or more application specific integrated circuits (ASICS), or some combination thereof. For example, the processor 44 may include one or more reduced instruction set (RISC) processors. The controller 42 may include a memory device 46 that may store information such as control software, look-up tables, configuration data, etc. The memory device 46 may include a tangible, non-transitory, machine-readable medium, such as a volatile memory (e.g., a random access memory (RAM)) and/or a nonvolatile memory (e.g., a read-only memory (ROM), flash memory, a hard drive, or any other suitable optical, magnetic, or solid-state storage medium, or a combination thereof). The memory device 46 may store a variety of information, which may be suitable for various purposes. For example, the memory device 46 may store machine-readable and/or processor-executable instructions 48 (e.g., firmware or software) for the processor execution.

In certain embodiments, the plurality of sensors 54 may be any of various sensor types useful in providing various operational data to the controller 42. For example, the sensors 54 may monitor flow, pressure, and temperature of the compressor 58, speed, and temperature of the turbine 70, vibration of the compressor 58 and the turbine 70, as well as flow for the exhaust gas, temperature, pressure and emission (e.g., CO₂, NOx) levels in the exhaust gas, properties of a batch of fuel (e.g., carbon content, Wobbe index, cetane number, octane number, and so on), temperature of the batch of fuel, temperature, pressure, clearance of the compressor 58 and the turbine 70 (e.g., distance between the rotating and stationary parts of the compressor 58, between the rotating and stationary parts of the turbine 70, and/or between other stationary and rotating components), flame temperature or intensity, vibration, combustion dynamics (e.g., fluctuations in pressure, flame intensity, and so forth), generator data from generator 82, output power from the turbine 70, and so forth. The sensors 54 may also include temperature sensors such as thermocouples, thermistors, and the like, disposed in the turbine trailer 84. The sensors 54 may also include flow sensors such as flowmeters (e.g., differential pressure flowmeters, velocity flowmeters, mass flowmeters, positive displacement flowmeters, open channel flowmeters) and liquid level sensors such as continuous level transmitters, ultrasonic transducers, laser level transmitters, and so on, disposed in the containerized module 80 and the turbine trailer 54. Additionally, the sensors 54 may include pressure sensors such as piezo-resistive pressure sensors, differential pressure sensors, optical pressure sensors, and so on, included in the containerized module 90 and turbine trailer 54.

Fuel properties may be sensed and/or otherwise provided to the controller 42, e.g., via a human operator interface in the containerized module 90 and the turbine trailer 84. The fuel properties may include moisture content, carbon content, chemical composition, biological contaminant content, specific gravity, ambient temperature, energy content, certain "numbers" (e.g., Wobbe Index, cetane number, octane number, and so on), or a combination thereof.

For example, to monitor liquid fuel properties in the containerized module 90, sensors 54 may be located within the raw fuel tank 4 and the clean fuel tank 22 and/or in any lines carrying the fuel throughout the fuel treatment system 91. These sensors 54 help to monitor the characteristics of the fuel before and after various treatment steps in the fuel treatment system 91, thereby helping the controller 42 to regulate the flow of the liquid fuel through the tank drain treatment system 2, the separators 8 and 36, the filters 30, 32, and 34, and so forth. For example, the sensors 54 may be placed near the pumps 18, 26, and 28, to regulate the direction of flow based on monitoring fuel properties such as moisture content and chemical composition. In certain embodiments, the sensors 54 may be located at, upstream, or downstream relative to the separators (e.g., 8 and 36) and the filters (e.g., 30 and 32) to determine the particulate and water content of the liquid fuel. Sensors 54 placed between the demineralized water supply 12 and the separator 8 help to monitor the characteristics of the demineralized water and help to regulate when and how much demineralized water may be pumped to the separator 8.

In certain embodiments, the controller 42 may be communicatively coupled to the sensors 54, a human machine interface (HMI) operator interface, and one or more actuators suitable for controlling components of the generator trailer 86. The actuators may include valves, switches, positioners, pumps, and the like, which are suitable for controlling the various components of the generator trailer 86. The controller 42 may receive data from the sensors 54 and may be used to control the compressor 58, the combustors 64, the turbine 68, the generator 82, and so forth.

With the preceding in mind, FIG. 2 is a detailed view of a fuel treatment process or circuit 200 within the tank drain treatment system 2. As mentioned above, the tank drain treatment system 2 removes particulate, water, and biological contaminants from the fuel. It should be noted that components (e.g., pumps, separator, and filter) within the tank drain treatment system 2 in FIG. 2 are different from the components outside of tank drain treatment system shown in FIG. 1. The fuel treatment circuit 200 is configured to pump a liquid fuel from a tank drain 202 of a fuel tank (e.g., drain 6 of the raw fuel tank 4 and/or drain 24 of the clean fuel tank 22) into the tank drain treatment system 2 via one or more pumps 204 as indicated by arrow 222. The pump 204 may include a variety of pump sizes and/or types, such as a three-screw pump, a two-screw-pump, or a centrifugal pump. The pump 204 may pump the liquid fuel to a level switch component 206 as indicated by arrow 224. The level switch component 206 may include a water detector or sensor, which determines the amount of water content in liquid fuel. If the level switch component 206 detects only water content in the liquid fuel retrieved from the bottom of the raw fuel tank 4 or the clean fuel tank 22, then the water content may be directed to the water drain 220 as indicated by arrow 228. However, if the level switch component 206 detects fuel contaminants in the liquid fuel, then the liquid fuel may be directed to a particulate removal system (e.g., one or more filters such as a stage 1 filter 208) as indicated by arrow 226. The stage 1 filter 208 may have a first size range of filtration (e.g., 4 to 7 microns) to remove contaminants (e.g., particulate) from the liquid fuel. After the stage 1 filter 208, the liquid fuel flows to a water removal system (e.g., one or more separators 210) as indicated by arrow 230.

Like the separator 36, the separator 210 may separate solid phases or solid and liquid phases from the liquid fuel. For example, the separator 210 may be a coalescer, which aggregates lighter or smaller particles that are capable of being drained gravitationally, thus improving the separation. However, the separator 210 may include a variety of types of separators. The separator 210 may be responsible for removing any residual water content from the liquid fuel. After water and particulate are substantially or entirely removed from the liquid fuel, the liquid fuel from the separator 210 may be sent to a biological treatment system (e.g., an ultraviolet (UV) light system 212) as indicated by arrow 234. The water content separated from the liquid fuel via the separator 210 is directed to a water drain 220 as indicated by arrow 232.

The UV light system 212 includes one or more ultraviolet lights 216. The UV light system 212 removes biological contaminants, such as bacteria, viruses, and cysts, and inhibits inorganic growth due to a germicidal ultraviolet wavelength produced via the UV lights 216. With a threshold amount of energy, such as UV radiation at a 254 nanometer wavelength or any other suitable wavelength, the DNA of pathogenic microorganisms is disrupted such that the microorganisms are inactive and cannot reproduce. The UV system 212 treats the liquid fuel for cryptosporidium, giardia, dysentery bacilli, salmonella, mycobacterium tuberculosis, streptococcus, E. coli, hepatitis B, cholera, algae, fungi, other bacteria, other viruses, and any combination thereof. The controller 42 may regulate the time interval (such as every minute, hour, or any suitable time period) at which the liquid fuel is exposed to the UV lights 216 and the duration of the exposure (10 minutes, 1 hour, or any suitable time period). For example, the controller 42 may control valves 214 to regulate the flow rate of liquid fuel and thus the exposure time that the liquid fuel is treated by each UV light 216. In the illustrated embodiment, the valves 214 are disposed upstream and downstream relative to the UV lights 216, such that the valves 214 can more precisely control the fuel (e.g., volume, flow rate, residence time, etc.) passing through a UV treatment area to help ensure that the liquid fuel is substantially or entirely free of biological contaminants. The valves 214 also regulate the flow of the liquid fuel to the raw fuel tank 4, as indicated by arrow 236 (or arrow 94, as shown in FIG. 1).

To monitor liquid fuel properties in the tank drain treatment system 2, sensors 54 (represented by "S") may be distributed throughout the tank drain treatment system 2. For example, the sensors 54 may be located in the liquid fuel at or near the tank drain 202 (e.g., drain 6 of the raw fuel tank 4 or drain 24 of the clean fuel tank 22) to monitor contaminants (e.g., water, particulate, and/or biological contaminants) at or near the bottom of the tanks 4 and 22. In turn, the feedback from the sensors 54 (e.g., percentage or level of contaminants) may be used by the controller 42 to control the timing, duration, and flow rate of the liquid fuel flow to the tank drain treatment system 2 via the pump 204. Sensors 54 may be also located near the filter 208, the separator 210, and within the UV light system 212 to determine the particulate, water, and biological contaminant content in the liquid fuel. Additionally, or alternately, liquid fuel properties (such as moisture content and chemical composition) may be monitored by placing the sensors 54 near the pump 204 and the level switch 206 to regulate the direction of flow based on the monitored fuel properties. The controller 42 may be communicatively coupled to the sensors 54 and receive data from them and may control the tank drain treatment system 2 to help reduce the level of contaminants (e.g., water, particulates, and biological contaminants) in the liquid fuel below a threshold level.

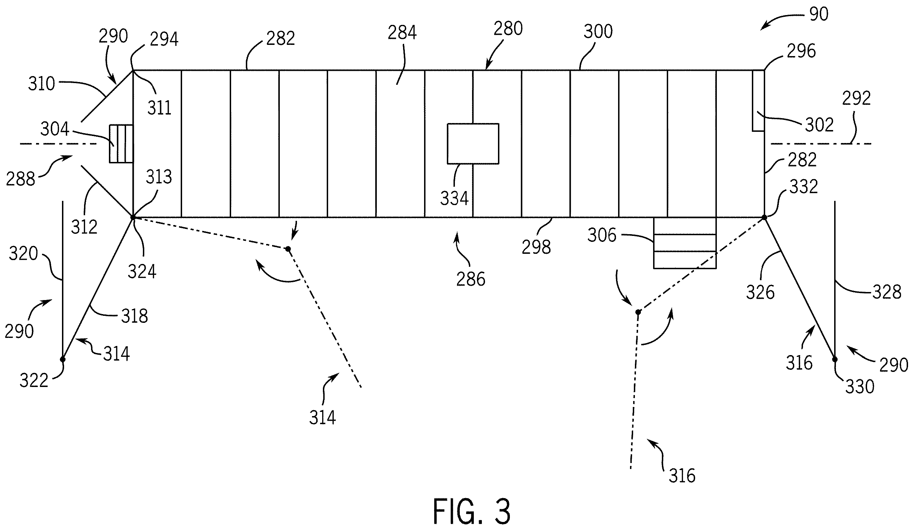

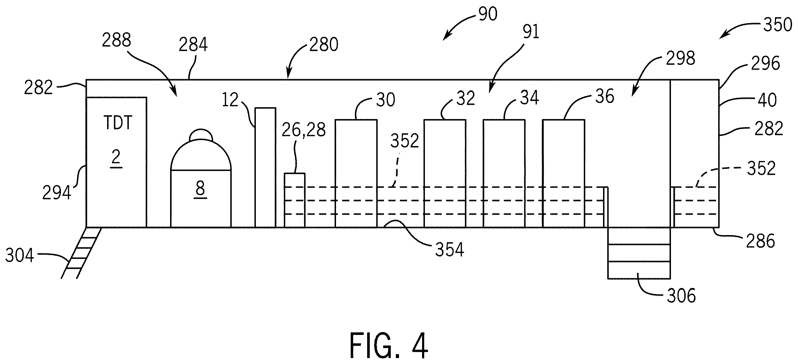

With the functions of the fuel treatment system 91 in the containerized module 90 described above, the structure of the containerized module 90 will be discussed now. FIG. 3 is a schematic top view of the containerized module 90 having the fuel treatment system 91 and the control house 40. The containerized module 90 includes a housing or enclosure 280 (e.g., metal enclosure) having a plurality of walls 282, a ceiling or roof 284, and a bottom support structure or floor 286 (see FIG. 4). The walls 282 also include a plurality of access openings 288 (or access areas) with removable panels or doors 290. In the illustrated embodiment, the enclosure 280 is elongated along a longitudinal axis 292 between opposite first and second distal ends 294 and 296, and the enclosure 280 includes opposite walls 282 (e.g., opposite sides or side walls 298 and 300) extending axially between the first and second distal ends 294 and 296. The tank drain treatment system 2 is disposed inside the enclosure 280 adjacent the first distal end 294, and the control house 40 is disposed inside the enclosure 280 adjacent the second distal end 296. The second distal end 296 has a connection panel 302 (e.g., a fluid connection panel) coupled to the control house 40 and various components of the fuel treatment system 91 inside the enclosure 280. The connection panel 302 may include electrical connections and fluid connections for connecting the containerized module 90 to the tanks 4 and 22, the gas turbine engine 57, and any other related equipment. A more in-depth discussion of the connections with the connection panel 302 will be described below.

At the first distal end 294, one of the access openings 288 of the enclosure 280 has removable panels or doors 290 (e.g., hinged doors 310 and 312 coupled to the enclosure 280 via hinges 311 and 313) and a stairwell 304. An operator or service technician is able to use the stairwell 304, the access opening 288, and the doors 310 and 312 to access the tank drain treatment system 2 for various reasons, including user monitoring and control, servicing, and repair. In some embodiments, the operator or service technician may be able to access other components of the fuel treatment system 91 through the first distal end 294. Additionally, in certain embodiments, the second distal end 296 may include a similar arrangement (e.g., stairwell 304, access opening 288, and doors 310 and 312) as the first distal end 294 to enable access to the control house 40.

One or both of the side walls 298 and 300 of the enclosure 280 also may include one or more access openings 288 and doors 290. In the illustrated embodiment, the side wall 298 has one or more access openings 288 and doors 290 (e.g., a first multi-section door 314 and a second multi-section door 316). For example, on the first side wall 298, the access opening(s) 288 may cover an entire length or substantially the entire length (e.g., 80, 85, 90, or 95 percent of the entire length) of the enclosure 280 between the first and second distal ends 294 and 296. The first multi-section door 314 includes first and second door sections 318 and 320 coupled together via hinges 322, wherein the first door section 318 is coupled to the enclosure 280 via hinges 324. Similarly, the second multi-section door 316 includes first and second door sections 326 and 328 coupled together via hinges 330, wherein the first door section 326 is coupled to the enclosure 280 via hinges 332. Each of the first and second multi-section doors 314 and 316 are shown in two different positions, as indicated by dashed lines for a first position and solid lines for a second position.

The first and second multi-section doors 314 and 316 are configured to rotate open to allow access into the enclosure 280 and, more specifically, access to the tank drain treatment system 2 (or at least some parts thereof), the separators 8 and 36, the pumps 26 and 28, the filters 30, 32, and 34, and the control house 40. The access opening(s) 288 along the side wall 298 also includes a stairwell 306, which may be disposed adjacent to the control house 40. The first and second multi-section doors 314 and 316 may vary in size and number of door sections and may open and close simultaneously or independently of each other. In some embodiments, the side wall 298 may include one or more sliding doors 290 instead of or in addition to one or both of the first and second multi-section doors 314 and 316. The roof 284 of the enclosure 280 also may include one or more vents, such as a central vent 334.

FIG. 4 is a schematic front view 350 of the containerized module 90 along the first side wall 298 with the first and second multi-section doors 314 and 316 in an open position (and removed for clarity), further illustrating an arrangement of the components of the fuel treatment system 91 and the control house 40 inside of the enclosure 280. The stairwell 304, which serves as an entrance or exit, is located at the first distal end 294 of the containerized module 90 near the tank drain treatment system 2. The stairwell 306, which serves as another entrance or exit, is located along the first side wall 298 adjacent the control house 40 at the second distal end 296. In FIG. 4, the dashed horizontal lines that span from the forwarding pumps 26 and 28 to or toward the control house 40 represent handrails 352, which are directly adjacent to a walkway 354 inside of the enclosure 280 (e.g., generally parallel to the handrails 352), as also illustrated in FIG. 1. The walkway 354 extends lengthwise along the enclosure 280 adjacent the forwarding pumps 26 and 28, the filters 30, 32, and 34, the separator 36, and the control house 40. Accordingly, using stairwell 306 and the walkway 354, an operator or service technician is able to enter the enclosure 280 and readily access each of these components (26, 28, 30, 32, 34, 36, and 40) for inspection, adjustments or control, and maintenance. The operator or service technician also may be able to access the tank drain treatment system 2, the separator 8, and/or the demineralized water supply 12 via the walkway 354 and/or the access opening 288.

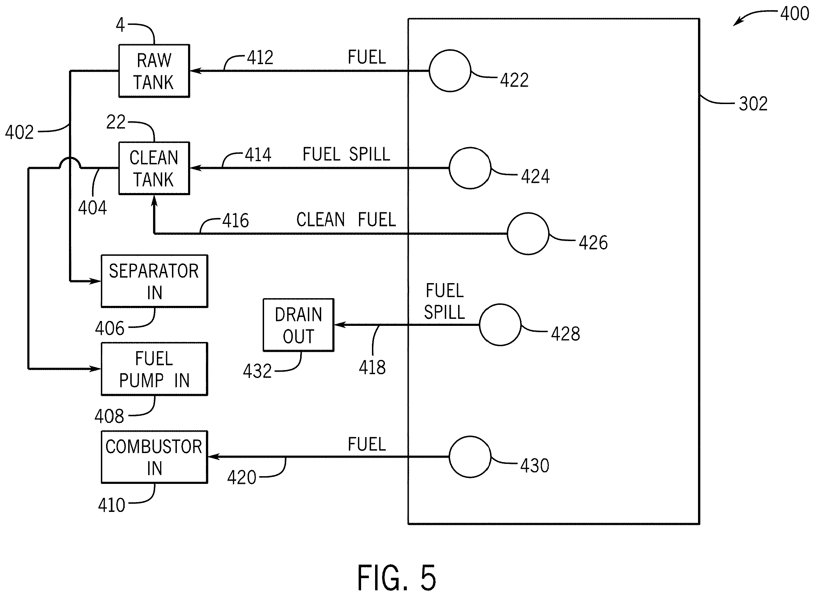

FIG. 5 is a schematic diagram of an embodiment of the connection panel 302, illustrating a configuration 400 of fluid ports 422, 424, 426, 428, and 430 coupled to one or more conduits leading to appropriate systems or components of the fuel treatment system 91 within the containerized module 90. The fluid ports 422, 424, 426, 428, and 430 are configured to removably couple to external components (i.e., outside of the containerized module 90), as illustrated in FIG. 1. For example, the fluid ports 422, 424, 426, 428, and 430 may include threaded connectors, quarter turn connectors, push-pull connectors, quick-disconnect connectors, or any suitable connectors having one or more seals.

The fluid port 422 may connect to a conduit configured to route the liquid fuel to the raw fuel tank 4 as indicated by arrow 412. The raw fuel tank 4 is configured to route the liquid fuel to a separator input 406 coupled to the separator 8 (see FIG. 1) through a conduit as indicated by arrow 402. The fluid port 424 may connect to a conduit to route the liquid fuel (e.g., fuel spill) from the fuel treatment system 91 to the clean fuel tank 22 as indicated by arrow 414. The fluid port 426 may connect to a conduit to route the liquid fuel (e.g., clean fuel) from the fuel treatment system 91 to the clean fuel tank 22 as indicated by arrow 416. The clean fuel tank 22 is configured to route the liquid fuel (e.g., clean fuel) through a conduit to a fuel pump input 408 (e.g., forwarding pumps 26 and 28, FIG. 1) as indicated by arrow 404. The fluid port 428 is configured to route a liquid fuel (e.g., fuel spill) through a conduit to a drain out 432 as indicated by arrow 418. Additionally, the fluid port 430 is configured to connect to a conduit to route the liquid fuel (e.g., clean fuel) to a combustor in (e.g., fuel nozzles 62 of gas turbine engine 57 coupled to generator 82) as indicate by arrow 420. The fluid connection panel 302 may not be limited to simply the fluid ports described herein, but rather the fluid ports 422, 424, 426, 428, and 430 serve as examples of connectivity between the control house 40, the containerized module 90, the tanks 4 and 22, and the gas turbine engine 57.

Technical effects of the disclosure include a fuel treatment system 91 wholly disposed within the containerized module 90 for ease of transport and connection to a mobile power generation system. The fuel treatment system 91 of the containerized module 90 treats and filters fuel from the raw fuel tank 4 and the clean fuel tank 22. The containerized module 90 includes the tank drain treatment system 2; the demineralized water supply 12; one or more pumps 18, 26, and 28; one or more separators 8 and 36; and one or more filters 30, 32, and 34. The tank drain treatment system 2 cleans the fuel from the raw fuel tank 4 and the clean fuel tank 22 by removing water via the separator 210, particulates via the filter 208, and biological contaminants (such as bacteria) via the UV light system 212 from the fuel. In addition to the components of the tank drain system 2, the containerized module 90 includes additional separators (e.g., separator 8, separator 36) and filters (e.g., stage 1 filter 30, stage 2 filter 32, bypass filter 34) to remove water content and particulates. The forwarding pumps 26 and 28 pump the fuel through these additional separators 8 and 36 and filters 30, 32, and 34 before the fuel is sent to the turbine trailer 84 to power the generator 82 in the generator trailer 86. A containerized module 90 for the fuel treatment system 91, which integrates various subsystems, provides ease in installation, minimizes the amount of space used, and reduces overall cost and efforts in developing and executing the fuel treatment system.

This written description uses examples to disclose the invention, including the best mode, and also to enable any person skilled in the art to practice the invention, including making and using any devices or systems and performing any incorporated methods. The scope of the herein claimed invention is defined by the appended claims.

## Claims

1. A system, comprising:
a fuel treatment system (91) configured to treat a fuel in at least one tank (4, 22), wherein the fuel treatment system comprises:
a housing (280);
a tank drain treatment system (2) disposed in the housing, wherein the tank drain treatment system is configured to remove water, particulates, and biological contaminants from the fuel along a treatment flow path; and
a first forwarding pump (26) disposed in the housing, wherein the first forwarding pump is configured to pump the fuel along a supply flow path (120, 122) to a gas turbine engine (57);
**characterized in that** the at least one tank comprises a raw fuel tank (4) and a clean fuel tank (22) and the tank drain treatment system is configured to receive the fuel from the raw fuel tank (4) and the clean fuel tank (22), and the tank drain treatment system is configured to return the fuel to the raw fuel tank (4).

2. The system of claim 1, wherein the treatment flow path of the tank drain treatment system (2) comprises a biological treatment system having at least one ultraviolet light (212); a particulate removal system having at least one filter (208); and a water removal system having at least one separator (210).

3. The system of the preceding claim, wherein the fuel treatment system comprises a separator (8) configured to separate water from the fuel along a flow path from the raw fuel tank to the clean fuel tank.

4. The system of any preceding claim, wherein the fuel treatment system comprises a particulate removal system having at least one filter (30, 32, 34) and a water removal system having at least one separator (36) along the supply flow path between the clean fuel tank (22) and the gas turbine engine (57).

5. The system of any preceding claim, wherein the fuel treatment system comprises a controller (42) disposed in the housing (280), wherein the controller is configured to monitor the water, the particulates, and the biological contaminants in the fuel via one or more sensors (54), wherein the controller is configured to control operation of the tank drain treatment system and the first forwarding pump (26) based on feedback from the one or more sensors.

6. The system of any preceding claim, wherein the housing (280) comprises a first access area (288) having one or more first doors (290) and a second access area having one or more second doors, wherein the first access area comprises access to the tank drain treatment system, wherein the second access area comprises a walkway and access to the first forwarding pump.

7. The system of any preceding claim, wherein the housing is an international intermodal container that is manufactured according to the specifications outlined by the International Organization for Standardization.

8. The system of any preceding claim, comprising the gas turbine engine (57), a first trailer (84) a second trailer (86), and a generator (82), wherein the gas turbine engine (57) is disposed on the first trailer (84); and a generator (82) disposed on the second trailer (86), wherein the generator is driven by the gas turbine engine.

9. A method, comprising:
flowing a fuel from at least one tank (4, 22) along a treatment flow path of a tank drain treatment system to remove water, particulates, and biological contaminants from the fuel, wherein the tank drain treatment system is disposed in a housing (280) of a fuel treatment system, wherein the at least one tank comprises a raw fuel tank (4) and a clean fuel tank (22); and
flowing the fuel along a supply flow path (120, 122) to a gas turbine engine (57), wherein the supply flow path comprises a first forwarding pump (26) disposed in the housing of the fuel treatment system,
**characterized in** flowing fuel from the raw fuel tank (4) to the tank drain treatment system (2), flowing fuel from the clean fuel tank (22) to the tank drain treatment system (2), and returning the fuel from the tank drain treatment system to the raw fuel tank.

10. The method of the preceding claim, comprising flowing fuel along a flow path from the raw fuel tank (4) to the clean fuel tank (22) and flowing said fuel through a separator (8) configured to separate water from said fuel while flowing said fuel along a flow path from the raw fuel tank (4) to the clean fuel tank (22).

11. The method of any preceding method claim, wherein flowing the fuel along the supply flow path to the gas turbine engine comprises flowing the fuel through a particulate removal system having at least one filter (30, 32, 34) and a water removal system having at least one separator (36), wherein the particulate removal system and the water removal system are coupled to the housing of the fuel treatment system.

12. The method of any preceding method claim, comprising:
monitoring the water, the particulates, and the biological contaminants in the fuel via one or more sensors (54); and
controlling operation of the tank drain treatment system and the first forwarding pump based on feedback from the one or more sensors.

## Patentansprüche

1. System, umfassend:
ein Brennstoffbehandlungssystem (91), das konfiguriert ist, um einen Brennstoff in mindestens einem Tank (4, 22) zu behandeln, wobei das Brennstoffbehandlungssystem umfasst:
ein Gehäuse (280);
ein Tankablaufbehandlungssystem (2), das in dem Gehäuse angeordnet ist, wobei das Tankablaufbehandlungssystem konfiguriert ist, um Wasser, Partikel und biologische Verunreinigungen entlang eines Behandlungsströmungspfads aus dem Brennstoff zu entfernen; und
eine erste Förderpumpe (26), die in dem Gehäuse angeordnet ist, wobei die erste Förderpumpe konfiguriert ist, um den Brennstoff entlang eines Versorgungsströmungspfads (120, 122) zu einem Gasturbinentriebwerk (57) zu pumpen;
**dadurch gekennzeichnet, dass** der mindestens eine Tank einen Rohbrennstofftank (4) und einen Reinbrennstofftank (22) umfasst und das Tankablaufbehandlungssystem konfiguriert ist, um den Brennstoff aus dem Rohbrennstofftank (4) und dem Reinbrennstofftank (22) aufzunehmen, und das Tankablaufbehandlungssystem konfiguriert ist, um den Brennstoff in den Rohbrennstofftank (4) zurückzuführen.

2. System nach Anspruch 1, wobei der Behandlungsströmungspfad des Tankablaufbehandlungssystems (2) ein biologisches Behandlungssystem umfasst, das mindestens ein Ultraviolettlicht (212) aufweist; ein Partikelentfernungssystem, das mindestens einen Filter (208) aufweist; und ein Wasserentfernungssystem, das mindestens einen Trenner (210) aufweist.

3. System nach dem vorstehenden Anspruch, wobei das Brennstoffbehandlungssystem einen Trenner (8) umfasst, der konfiguriert ist, um Wasser entlang eines Strömungspfads von dem Rohbrennstofftank zu dem Reinbrennstofftank von dem Brennstoff zu trennen.

4. System nach einem der vorstehenden Ansprüche, wobei das Brennstoffbehandlungssystem ein Partikelentfernungssystem, das mindestens einen Filter (30, 32, 34) aufweist, und ein Wasserentfernungssystem umfasst, das mindestens einen Trenner (36) entlang des Versorgungsströmungspfads zwischen dem Reinbrennstofftank (22) und dem Gasturbinentriebwerk (57) aufweist.

5. System nach einem der vorstehenden Ansprüche, wobei das Brennstoffbehandlungssystem eine Steuerung (42) umfasst, die in dem Gehäuse (280) angeordnet ist, wobei die Steuerung konfiguriert ist, um das Wasser, die Partikel und die biologischen Verunreinigungen in dem Brennstoff über einen oder mehrere Sensoren (54) zu überwachen, wobei die Steuerung konfiguriert ist, um den Betrieb des Tankablaufbehandlungssystems und der ersten Förderpumpe (26) basierend auf der Rückmeldung von dem einen oder den mehreren Sensoren zu steuern.

6. System nach einem der vorstehenden Ansprüche, wobei das Gehäuse (280) einen ersten Zugangsbereich (288), der eine oder mehrere erste Türen (290) aufweist, und einen zweiten Zugangsbereich umfasst, der eine oder mehrere zweite Türen aufweist, wobei der erste Zugangsbereich einen Zugang zu dem Tankablaufbehandlungssystem umfasst, wobei der zweite Zugangsbereich einen Übergang und einen Zugang zu der ersten Förderpumpe umfasst.

7. System nach einem der vorstehenden Ansprüche, wobei das Gehäuse ein internationaler Intermodalcontainer ist, der gemäß den Spezifikationen der Internationalen Normungsorganisation hergestellt wird.

8. System nach einem der vorstehenden Ansprüche, umfassend das Gasturbinentriebwerk (57), einen ersten Trailer (84), einen zweiten Trailer (86) und einen Generator (82), wobei das Gasturbinentriebwerk (57) auf dem ersten Trailer (84) angeordnet ist; und einen Generator (82), der auf dem zweiten Trailer (86) angeordnet ist, wobei der Generator durch das Gasturbinentriebwerk angetrieben wird.

9. Verfahren, umfassend:
Strömenlassen eines Brennstoffs aus mindestens einem Tank (4, 22) entlang eines Behandlungsströmungspfads eines Tankablaufbehandlungssystems, um Wasser, Partikel und biologische Verunreinigungen aus dem Brennstoff zu entfernen, wobei das Tankablaufbehandlungssystem in einem Gehäuse (280) eines Brennstoffbehandlungssystems angeordnet ist, wobei der mindestens eine Tank einen Rohbrennstofftank (4) und einen Reinbrennstofftank (22) umfasst; und
Strömenlassen des Brennstoffs entlang eines Versorgungsströmungspfads (120, 122) zu einem Gasturbinentriebwerk (57), wobei der Versorgungsströmungspfad eine erste Förderpumpe (26) umfasst, die in dem Gehäuse des Brennstoffbehandlungssystems angeordnet ist,
**gekennzeichnet durch** das Strömenlassen des Brennstoffs von dem Rohbrennstofftank (4) zu dem Tankablaufbehandlungssystem (2), Strömenlassen des Brennstoffs von dem Reinbrennstofftank (22) zu dem Tankablaufbehandlungssystem (2) und Rückführen des Brennstoffs von dem Tankablaufbehandlungssystem zu dem Rohbrennstofftank.

10. Verfahren nach dem vorstehenden Anspruch, umfassend das Strömenlassen von Brennstoff entlang eines Strömungspfads von dem Rohbrennstofftank (4) zu dem Reinbrennstofftank (22) und das Strömenlassen des Brennstoffs durch einen Trenner (8), der konfiguriert ist, um Wasser von dem Brennstoff zu trennen, während der Brennstoff entlang eines Strömungspfads von dem Rohbrennstofftank (4) zu dem Reinbrennstofftank (22) strömt.

11. Verfahren nach einem der vorstehenden Verfahrensansprüche, wobei das Strömenlassen des Brennstoffs entlang des Versorgungsströmungspfads zu dem Gasturbinentriebwerk das Strömenlassen des Brennstoffs durch ein Partikelentfernungssystem, das mindestens einen Filter (30, 32, 34) aufweist, und ein Wasserentfernungssystem umfasst, das mindestens einem Trenner (36) aufweist, wobei das Partikelentfernungssystem und das Wasserentfernungssystem mit dem Gehäuse des Brennstoffbehandlungssystems gekoppelt sind.

12. Verfahren nach einem der vorstehenden Ansprüche, umfassend:
Überwachen des Wassers, der Partikel und der biologischen Verunreinigungen in dem Brennstoff über einen oder mehrere Sensoren (54); und
Steuern des Betriebs des Tankablaufbehandlungssystems und der ersten Förderpumpe basierend auf der Rückmeldung von dem einen oder den mehreren Sensoren.

## Revendications

1. Système, comprenant :
un système de traitement de carburant (91) conçu pour traiter un carburant dans au moins un réservoir (4, 22), dans lequel le système de traitement de carburant comprend :
un logement (280) ;
un système de traitement de vidange de réservoir (2) disposé dans le logement, dans lequel le système de traitement de vidange de réservoir est conçu pour éliminer l'eau, les particules et les contaminants biologiques du carburant le long d'une voie d'écoulement de traitement ; et
une première pompe de transfert (26) disposée dans le logement, dans lequel la première pompe de transfert est conçue pour pomper le carburant le long d'une voie d'écoulement d'alimentation (120, 122) vers une turbine à gaz (57) ;
**caractérisé en ce que** l'au moins un réservoir comprend un réservoir (4) à carburant brut et un réservoir (22) à carburant propre et le système de traitement de vidange de réservoir est conçu pour recevoir le carburant provenant du réservoir (4) à carburant brut et du réservoir (22) à carburant propre et le système de traitement de vidange de réservoir est conçu pour renvoyer le carburant vers le réservoir (4) à carburant brut.

2. Système selon la revendication 1, dans lequel la voie d'écoulement de traitement du système de traitement de vidange de réservoir (2) comprend un système de traitement biologique présentant au moins une lumière ultraviolette (212) ; un système d'élimination des particules présentant au moins un filtre (208) ; et un système d'élimination de l'eau présentant au moins un séparateur (210).

3. Système selon la revendication précédente, dans lequel le système de traitement de carburant comprend un séparateur (8) conçu pour séparer l'eau du carburant le long d'une voie d'écoulement allant du réservoir à carburant brut au réservoir à carburant propre.

4. Système selon l'une quelconque revendication précédente, dans lequel le système de traitement de carburant comprend un système d'élimination des particules présentant au moins un filtre (30, 32, 34) et un système d'élimination de l'eau présentant au moins un séparateur (36) le long de la voie d'écoulement d'alimentation entre le réservoir (22) à carburant propre et la turbine à gaz (57).

5. Système selon l'une quelconque revendication précédente, dans lequel le système de traitement de carburant comprend un dispositif de commande (42) disposé dans le logement (280), dans lequel le dispositif de commande est configuré pour surveiller l'eau, les particules et les contaminants biologiques dans le carburant par l'intermédiaire d'un ou de plusieurs capteurs (54), dans lequel le dispositif de commande est configuré pour commander le fonctionnement du système de traitement de vidange de réservoir et de la première pompe de transfert (26) sur la base du retour du ou des capteurs.

6. Système selon l'une quelconque revendication précédente, dans lequel le logement (280) comprend une première zone d'accès (288) présentant une ou plusieurs premières portes (290) et une seconde zone d'accès présentant une ou plusieurs secondes portes, dans lequel la première zone d'accès comprend l'accès au système de traitement de vidange de réservoir, dans lequel la seconde zone d'accès comprend une passerelle et un accès à la première pompe de transfert.

7. Système selon l'une quelconque revendication précédente, dans lequel le logement étant un conteneur intermodal international fabriqué conformément aux spécifications définies par l'Organisation internationale de normalisation.

8. Système selon l'une quelconque revendication précédente, comprenant la turbine à gaz (57), une première remorque (84), une seconde remorque (86) et un générateur (82), dans lequel la turbine à gaz (57) est disposée sur la première remorque (84) ; et un générateur (82) est disposé sur la seconde remorque (86), dans lequel le générateur est entraîné par la turbine à gaz.

9. Procédé, comprenant :
l'écoulement d'un carburant provenant d'au moins un réservoir (4, 22) le long d'une voie d'écoulement de traitement d'un système de traitement de vidange de réservoir pour l'élimination de l'eau, des particules et des contaminants biologiques du carburant, dans lequel le système de traitement de vidange de réservoir est disposé dans un logement (280) d'un système de traitement de carburant, dans lequel l'au moins un réservoir comprenant un réservoir (4) à carburant brut et un réservoir (22) à carburant propre ; et
l'écoulement du carburant le long d'une voie d'écoulement d'alimentation (120, 122) vers une turbine à gaz (57), dans lequel la voie d'écoulement d'alimentation comprend une première pompe de transfert (26) disposée dans le logement du système de traitement de carburant,
**caractérisé par** l'écoulement du carburant à partir du réservoir (4) à carburant brut vers le système de traitement de vidange de réservoir (2), l'écoulement du carburant à partir du réservoir (22) à carburant propre vers le système de traitement de vidange de réservoir (2) et le retour du carburant à partir du système de traitement de vidange de réservoir vers le réservoir à carburant brut.

10. Procédé selon la revendication précédente, comprenant l'écoulement du carburant le long d'une voie d'écoulement allant du réservoir (4) à carburant brut au réservoir (22) à carburant propre et l'écoulement dudit carburant à travers un séparateur (8) conçu pour séparer l'eau dudit carburant pendant l'écoulement dudit carburant le long d'une voie d'écoulement allant du réservoir (4) à carburant brut au réservoir (22) à carburant propre.

11. Procédé selon l'une quelconque revendication précédente, dans lequel l'écoulement du carburant le long de la voie d'écoulement d'alimentation vers la turbine à gaz comprend l'écoulement du carburant à travers un système d'élimination des particules présentant au moins un filtre (30, 32, 34) et un système d'élimination de l'eau présentant au moins un séparateur (36), dans lequel le système d'élimination des particules et le système d'élimination de l'eau sont accouplés au logement du système de traitement de carburant.

12. Procédé selon l'une quelconque revendication précédente, comprenant :
la surveillance de l'eau, des particules et des contaminants biologiques dans le carburant par l'intermédiaire d'un ou de plusieurs capteurs (54) ; et
la commande du fonctionnement du système de traitement de vidange de réservoir et de la première pompe de transfert sur la base du retour du ou des capteurs.
